# EUROPÄISCHE PATENTSCHRIFT

(11) **EP 3 931 443 B1**
(45) Veröffentlichungstag und Bekanntmachung des Hinweises auf die Patenterteilung: **28.02.2024**
(21) Anmeldenummer: 20706702.6
(22) Anmeldetag: 20.02.2020
(51) Int. Cl.: F03D 17/00

(54) **SENSORKIT FÜR EINE WINDENERGIEANLAGE**
SENSOR KIT FOR A WIND TURBINE
KIT DE CAPTEUR POUR UNE ÉOLIENNE

(30) Priorität: 26.02.2019 DE 102019104820
(43) Veröffentlichungstag der Anmeldung: 05.01.2022
(73) Patentinhaber: VC VIII Polytech Holding ApS, 6740 Bramming (DK)
(72) Erfinder: HOFFMANN, Lars, 80796 München (DE); GERSTER, Philipp, 81677 München (DE)
(74) Vertreter: Zacco Denmark A/S
(86) Internationale Anmeldenummer: PCT/EP2020/054528
(87) Internationale Veröffentlichungsnummer: WO 2020/173809

(56) Entgegenhaltungen:
- WO-A1-2018/228648
- CN-A- 108 561 279
- US-A1- 2016 032 893
- US-A1- 2018 363 633

## Beschreibung

### TECHNISCHES GEBIET

Die vorliegende Offenbarung bezieht sich auf eine Windenergieanlage, ein Sensorkit für eine Windenergieanlage, ein System mit einer Windenergieanlage und einem onlinebasierten Speicher- und Serverdienst sowie ein Verfahren zum Senden von Daten von einer Windenergieanlage an einen onlinebasierten Speicher- und Serverdienst. Insbesondere bezieht sich die Erfindung auf eine Windenergieanlage, die beispielsweise einen oder mehrere Sensoren und eine Netzinterface aufweist, so dass die Daten an einen onlinebasierten Speicher- und Serverdienst gesendet werden können.

### TECHNISCHER HINTERGRUND

Es ist bekannt, dass eine Erhebung von Daten von Windenergieanlage einem sinnvollen und sicheren Betrieb der Windenergieanlage bzw. eines Windparks förderlich ist. Ein Beispiel sind Daten zur Messung der Windgeschwindigkeit, die dafür genutzt werden, die Blattwinkelverstellung zu steuern oder, im Falle, dass die Windgeschwindigkeit zu hoch wird, den Rotor bzw. die Anlage abzuschalten, um die Anlage vor Beschädigung zu schützen.

Auf Windenergieanlage können Daten von einer Vielzahl an Sensoren erhoben werden. Diese Sensordaten werden bisher für einfache, lokale Applikationen verwendet und gelöscht oder nicht weiter genutzt. Um bestimmte Applikation auf Windkraftanlagen zu realisieren, (z.B. Eiserkennung, Condition Monitoring, ...), werden z.B. eigene Sensoren installiert. Idealerweise verfügt jede Windenergieanlage über ihren eigenen, kompletten Sensorensatz.

Die Daten sind jedoch meist nur lokal verfügbar. Zudem sind ältere Windenergieanlagen meist nicht mit umfangreicher Sensorik ausgestattet, wodurch eine qualifizierte Aussage über einen Zustand der Windenergieanlage nicht möglich ist.

Ein Beispiel für ein System aus dem Stand der Technik ist der CN 108 561 279 A bzw. der US 2018/363633 A1 zu entnehmen.

Es ist daher erstrebenswert, Windenergieanlage und Windparks derart zu verbessern, dass Sensordaten allgemein verfügbar sind.

### ZUSAMMENFASSUNG

Gemäß einer Ausführungsform der vorliegenden Offenbarung wird eine Windenergieanlage bereitgestellt. Die Windenergieanlage umfasst einen Sensor zum Erfassen von Daten, eine Datenverarbeitungsvorrichtung zum Verarbeiten der erfassten Daten, und ein Netzinterface zum Verbinden der Datenverarbeitungsvorrichtung mit einem Datennetz, wobei das Netzinterface eingerichtet ist, um von der Datenverarbeitungsvorrichtung verarbeitete Daten an einen onlinebasierten Speicher- und Serverdienst zu senden und/oder Daten von dem onlinebasierten Speicher- und Serverdienst (20) zu empfangen.

Gemäß einer weiteren Ausführungsform der vorliegenden Offenbarung wird ein Sensorkit für eine Windenergieanlage bereitgestellt. Das Sensorkit umfasst einen, insbesondere nachrüstbar, an der Windenergieanlage zu montierenden Sensor zum Erfassen von Daten, eine Datenverarbeitungsvorrichtung zum Verarbeiten der erfassten Daten, und ein Netzinterface zum Verbinden der Datenverarbeitungsvorrichtung mit einem Datennetz, wobei das Netzinterface eingerichtet ist, um von der Datenverarbeitungsvorrichtung verarbeitete Daten an einen onlinebasierten Speicher- und Serverdienste zu senden und/oder Daten von dem onlinebasierten Speicher- und Serverdienst (20) zu empfangen.

Gemäß einer weiteren Ausführungsform der vorliegenden Offenbarung wird ein System mit einer Windenergieanlage und einem onlinebasierten Speicher- und Serverdienst bereitgestellt. Das System umfasst einen auf der Windenergieanlage angeordneten Sensor zum Erfassen von Daten, eine Datenverarbeitungsvorrichtung zum Verarbeiten der erfassten Daten, und ein Netzinterface zum Verbinden der Datenverarbeitungsvorrichtung mit einem Datennetz, wobei das Netzinterface eingerichtet ist, um von der Datenverarbeitungsvorrichtung verarbeitete Daten an den onlinebasierten Speicher- und Serverdienst zu senden.

Gemäß einer weiteren Ausführungsform wird ein Verfahren zum Senden von Daten von einer Windenergieanlage an einen onlinebasierten Speicher- und Serverdienst bereitgestellt. Das Verfahren umfasst Erfassen von Daten mittels eines auf der Windenergieanlage angeordneten Sensors, Verarbeiten der erfassten Daten mittels einer Datenverarbeitungsvorrichtung, und Senden von der Datenverarbeitungsvorrichtung verarbeitete Daten an den onlinebasierten Speicher- und Serverdienst über ein Datennetz.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
Fig. 1 eine beispielhafte Windkraftanlage gemäß Ausführungsformen;
Fig. 2 ein beispielhaftes System mit einer Windenergieanlage und einem onlinebasierten Speicher- und Serverdienst gemäß Ausführungsformen; und
Fig. 3 ein Ablaufdiagramm zur Illustration eines beispielhaften Verfahrens zum Senden von Daten von einer Windenergieanlage an einen onlinebasierten Speicher- und Serverdienst gemäß Ausführungsformen.

### BESCHREIBUNG VON AUSFÜHRUNGSFORMEN

Nachstehend werden Ausführungsformen der vorliegenden Offenbarung näher erläutert. Die Zeichnungen dienen der Veranschaulichung eines oder mehrerer Beispiele von Ausführungsformen. In den Zeichnungen bezeichnen gleiche Bezugszeichen die gleichen, oder ähnliche Merkmale der jeweiligen Ausführungsformen. Merkmale, die als Teil einer Ausführungsform beschrieben werden, können auch in Verbindung mit einer anderen Ausführungsform verwendet werden, und so eine weitere Ausführungsform bilden.

Bestandsanlagen in späten Verlauf Ihrer Auslegungslebensdauer von 20 Jahren haben Potential auf eine Genehmigung für mehrere Jahre Weiterbetrieb. Oftmals sind diese Bestandsanlagen nicht mit umfangreicher Sensorik oder CMS ausgestattet und eine qualifizierte Aussage über die Lasthistorie der Windenergieanlage ist somit nicht möglich. Ein ganzheitliches Monitoringsystem für diese Anlagen ist nicht vorhanden, wenn überhaupt gibt es bisher nur spezifische Einzelsysteme die wiederum keine ganzheitliche Betrachtung der Windenergieanlage zulassen. Oftmals sind bestehende Systeme abhängig von Hersteller-SCADA-Daten und eine Stand-Alone Lösung besteht noch nicht.

Ausführungsformen der vorliegenden Erfindung erlauben eine digitale Einbindung von Windenergieanlagen in eine IIoT-Umgebung (Industrial Internet of Things-Umgebung), insbesondere zur Ermöglichung von Echtzeit-Monitoring und Steigerung der Performancetransparenz. Hierbei können durch eine kombinierte, modular aufgebaute Hardware- und Softwareplattform, Bestandsanlagen mit Lösungen zur AEP Steigerung und O&M-Kosten Reduktion, sowie zur Steigerung der Anlagenlebenszeit und Schadens- bzw. Ausfallsrisiko in Bezug auf einen Weiterbetrieb nach 20 Jahren, ausgestattet werden.

Insbesondere wird, basierend auf einer Last- und Beschleunigungssensorplattform und einer zentralen Datenverarbeitungsvorrichtung, eine digitale Einbindung der Anlage sowie die Bereitstellung der Anlagendaten in einer Cloud ermöglicht. Durch eine Turbine Physics Library können auf der Anlage erfasste Messdaten aggregiert und daraus, über einen digitalen Zwilling der Anlage, weitere Anlagendaten generiert werden. Das System kann autark agieren und ist nicht zwingend auf externe SCADA Daten angewiesen. Nach der Datenübertragung an die Cloud ist, neben der Bereitstellung der Daten, auch eine Integration der Daten über eine API in eine bestehende Second Level SCADA-Software möglich.

In der Praxis kann einen hohe Datenverfügbarkeit, beispielsweise in der Windenergieanlage, in der Cloud, beim Kunden, usw., bereitgestellt werden. Ferner kann der jährliche Energieertrag durch Betriebsoptimierung und Reduktion von Anlagenstillstand gesteigert werden. Auch kann eine Reduktion von Betriebskosten durch Früherkennung von Anlagenschäden sowie Wartungsoptimierung durch Predictive Maintenance-Maßnahmen und Service Priorisierung erreicht werden. Ferner kann ein Servicerisiko von Problemanlagen im Portfolio durch gezieltes Monitoring minimiert werden. Darüber hinaus kann die Lebenszeit von Bestandsanlagen nach Auslegungsdauer durch Messung von tatsächlichen Lasten an der Anlage als ergänzende Information und gegebenenfalls Ersatz für konservative Lastannahmen bei Weiterbetriebsgutachten verlängert werden. In der Praxis kann also eine wettbewerbsfähige und Herstellerunabhängige Retrofit-Lösung bereitgestellt werden, die insbesondere unabhängig von den Hersteller-SCADA-Daten sein kann.

Die vorliegende Offenbarung kann also eine Kombination einer Hardware-Sensorplattform und einer darauf basierenden, modular aufgebauten Softwarelösung, die verschiedene Problematiken im Betrieb von Windenergieanlagen adressiert, bereitstellen. Zudem kann durch die Erstellung eines digitalen Zwillings und der Berechnung von Daten der (gesamten) Anlage, ein autark arbeitendes System erstellt werden, das nicht auf die Verfügbarkeit externer Daten oder SCADA Daten angewiesen ist.

Insbesondere können Sensoren, Sensordatensammelschnittstellen, Auswerteeinheiten oder Datenverarbeitungsvorrichtungen in Windenergieanlagen, Windparks, Datensammeleinrichtungen, Wetterstationen oder sonstigen Einrichtungen, die Daten erheben oder Verarbeiten, die zum Betrieb von Windparks und Windenergieanlagen nützlich sind, gemäß hier vorliegender Ausführungsformen derart ausgestaltet sein, dass sie ihre Daten in eine Cloud hochladen können. Sensoren oder Sensordatensammelschnittstellen können direkt gemessene Größen oder Primärdaten (Windgeschwindigkeit, Beschleunigungen, Temperaturen, Dehnungen, usw.) erfassen und als Daten bereitstellen. Auswerteeinheiten oder Datenverarbeitungsvorrichtung können die erfassten Daten verarbeiten und Sekundärdaten, wie beispielsweise Blattlast, Eismasse, eingespeiste Leistung, usw., bereitstellen.

Ferner können gesammelte und in die Cloud geladene Daten analysiert und dabei Erkenntnisse gewonnen werden. Diese Erkenntnisse können auf eine Vielzahl von Anlagen überspielt werden und können so einen zusätzlichen Nutzen bieten. Es können auch Daten gesammelt und ausgewertet werden, die aktuell nicht zugänglich sind (z.B. Betriebsdaten von Sub-Systemen; Thema Device Health, ...). Zudem können Drittanbieter Anwendungen auf bestehender IIoT-Vorrichtung entwickeln und vertreiben. Auch kann die Einrichtung der Datenverarbeitungsvorrichtung anlagenspezifisch und über den Zeitverlauf aus der Ferne angepasst werden (Software-Update).

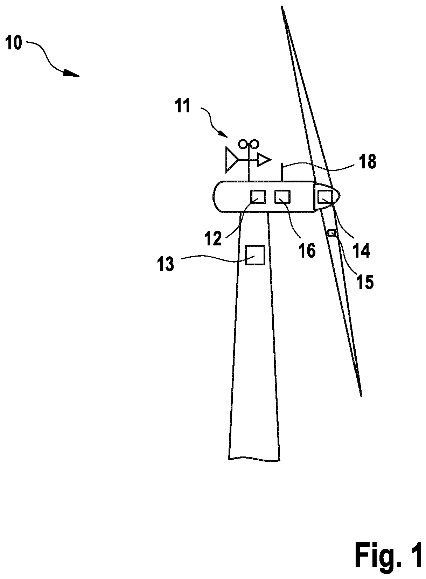

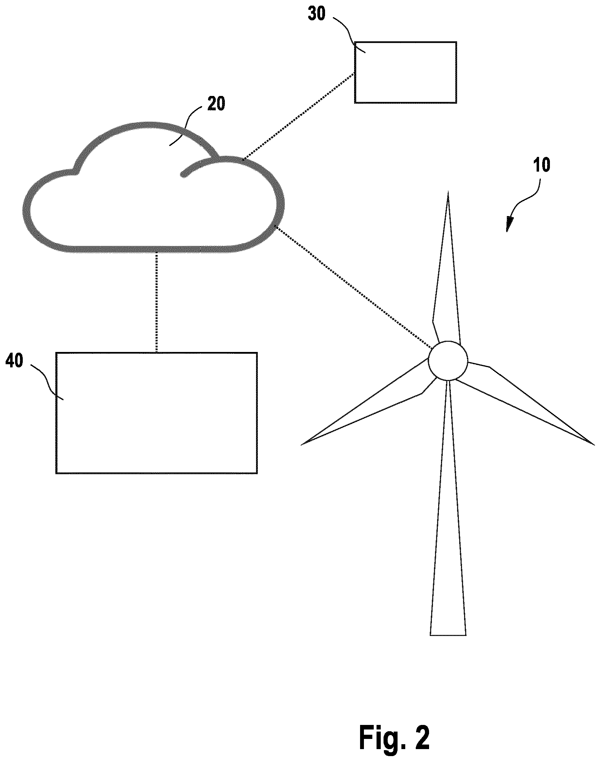

Die Figur 1 zeigt eine beispielhafte Windenergieanlage 10. An der Windenergieanlage 10 gemäß Figur 1 sind beispielhaft mehrere Sensoren 11, 12, 13, 14, 15 angeordnet. Sensor 11 kann beispielsweise ein Windgeschwindigkeitsmesser sein. Die Sensoren 11, 12, 13, 14 und 15 können Daten erfassen. Die Daten können relevant hinsichtlich des Betriebs der Windenergieanlage sein. Ferner kann einen Datenverarbeitungsvorrichtung 16 vorgesehen sein. Die Datenverarbeitungsvorrichtung 16 kann die erfassten Daten verarbeiten. Über ein Netzinterface 18 können die verarbeiteten Daten übertragen werden. Insbesondere kann das Netzinterface 18 zum Verbinden der Datenverarbeitungsvorrichtung mit einem Datennetz eingerichtet sein. Das Netzinterface kann eingerichtet sein, um von der Datenverarbeitungsvorrichtung 16 verarbeitete Daten an einen onlinebasierten Speicher- und Serverdienst (Bezugszeichen 20 in Figur 2) zu senden.

Sensoren 12, 13, 14 und 15 können Sensoren sein, die Messdaten verschiedenster Parameter zum Beispiel eines Rotors, eines Getriebes oder eines Generators an der Windkraftanlage aufnehmen. An einer Windenergieanlage können einer oder mehrere Sensoren 11, 12, 13, 14 und 15 angebracht sein. Folglich soll für die vorliegende Offenbarung, sofern nicht explizit anders angegeben, stets von mindestens einem Sensor bzw. einer Kombination von mehreren Sensoren ausgegangen werden, auch wenn für die einfacherer Adressierung nur "Sensor" im Singular verwendet wird.

Gemäß hierin beschriebener Ausführungsformen kann also ein Sensor 11, 12, 13, 14, 15 auf der Windenergieanlage angeordnet sein. Der Sensor 11, 12, 13, 14, 15 kann an einem Rotorblatt der Windenergieanlage, an einer Turbine der Windenergieanlage, an einem Getriebe der Windenergieanlage, an einem Turm der Windenergieanlage usw. angeordnet sein oder ein externer Sensor sein.

Beispielsweise kann der Sensor 11, 12, 13, 14, 15 ein optischer Sensor sein. Gemäß hierin beschriebener Ausführungsformen kann der Sensor, 12, 13, 14, 15 ein faseroptischer Sensor sein. Insbesondere kann der Sensor, 12, 13, 14, 15 kann eine faseroptischer Dehnungssensor oder Beschleunigungssensor sein.

Der Sensor 11, 12, 13, 14, 15 kann mit der Datenverarbeitungsvorrichtung 16 verbunden sein. Beispielsweise kann der Sensor 11, 12, 13, 14, 15 über eine drahtgebundenen oder eine drahtlose Verbindung mit der Datenverarbeitungsvorrichtung 16 verbunden sein. Sind der Sensor 11, 12, 13, 14, 15 und die Datenverarbeitungsvorrichtung 16 auf gegeneinander beweglichen Teilen der Windenergieanlage 10 angeordnet, wie beispielsweise dem Rotor und der Gondel, kann einen drahtlose Verbindung von Vorteil sein. Eine drahtlose Verbindung kann beispielsweise über Funk, insbesondere über einen Bluetooth-Standard oder WLAN-Standard, realisiert werden.

Die Datenverarbeitungsvorrichtung 16 kann beispielsweise eine digitale Prozessoreinheit ("DPU") verwenden und/oder sein. Gemäß hierein beschriebener Ausführungsformen können die vom Sensor erfassten Daten Primärdaten sein. Die Datenverarbeitungsvorrichtung 16 kann eingerichtet sein, die Primärdaten zu verarbeiten. Insbesondere kann die Datenverarbeitungsvorrichtung 16 eingerichtete sein die Primärdaten zu Sekundärdaten zu verarbeiten. Ferner kann das Netzinterface 18 eingerichtet sein, die Sekundärdaten zu senden. In der Praxis kann somit die zu sendende Datenmenge reduziert werden. Gemäß hierein beschriebener Ausführungsformen können die erfassten, verarbeiteten und/oder zu sendenden Daten keine SCADA-Daten sein. In der Praxis kann das System von SCADA-Daten unabhängig sein, auch wenn SCADA-Daten als zusätzliche Informationsquelle einfließen können.

Alternativ oder zusätzlich kann das Netzinterface 18 eingerichtet sein, die Primärdaten zu senden. Dann kann die Datenverarbeitung in dem onlinebasierten Speicher- und Serverdienst 20 erfolgen. In der Praxis können so die Rohdaten vorgehalten werden, zum Beispiel für den Fall, dass sich später eine neue Auswertemöglichkeit ergibt.

Gemäß hierein beschriebener Ausführungsformen kann die Datenverarbeitungsvorrichtung 16 eingerichtete sein, die erfassten Daten in Echtzeit zu verarbeiten. Ferner kann das Netzinterface 18 eingerichtete sein, die verarbeiteten Daten in Echtzeit zu senden. In der Praxis kann somit eine Echtzeitüberwachung der Windenergieanlage 10 erzielt werden. Alternativ oder zusätzlich können die verarbeiteten Daten zum Senden downgesampled werden.

Der einfachen Darstellung wegen ist das Netzinterface 18 in Figur 1 als Antenne abgebildet. Das Netzinterface 18 kann jedoch jedes geeignete Netzinterface sein und selbst über eine Logikschaltung oder eine Prozessorschaltung verfügen. Gemäß hierin beschriebener Ausführungsformen kann das Netzinterface 18 einen Mobilfunkstandard verwenden. Das Netzinterface 18 kann jedoch auch einen kabelgebundenen Standard verwenden, wie eine Telefonleitung oder eine DSL-Leitung.

Wie herein beschrieben können die Daten relevant hinsichtlich des Betriebs einer Windenergieanlage oder eines Windparks sein. Gemäß hierein beschriebener Ausführungsformen können die verarbeiteten Daten aus folgender Gruppe sein: meteorologische Daten, Betriebs- oder Strukturdaten der Windkraftanlage, Überwachungsdaten von Geräten (Device Health; z.B. Chip-Temperatur) und/oder Daten hinsichtlich des versorgten Stromnetzes.

Wetterdaten können meteorologische Daten sein, die für den Betrieb des Windparks oder der Windenergieanlage relevant sein können. Darunter fallen beispielsweise Daten wie: Windgeschwindigkeit, Außentemperatur, Luftfeuchtigkeit. Aus diesen Werten lassen sich beispielsweise im Vorfeld Hinweise auf Eisansatz an den Rotorblättern erkennen und vorausschauend können Rotorblattheizungen aktiviert werden um einem Eisansatz entgegenzuwirken.

Aus Daten für die Windgeschwindigkeit lässt sich wiederum erkennen ob eine Windkraftanlage beispielsweise wegen zu hoher Windgeschwindigkeit stillgelegt werden sollte. Wenn diese Daten von Stationen erhoben werden die sich weiter weg befinden kann dadurch eine Prognose für die nächste Zeit gestellt werden und so den Betrieb der Anlage optimieren zu können.

Daten wiederum, die beispielsweise von entsprechenden Sensoren des Stromversorgers, in dessen Netz die erzeugte Windenergie eingespeist wird, erzeugt werden, können dazu verwendet werden, eine Leistungsabgabe der Windkraftturbine bzw. der Rotoren entsprechend zu regeln. Daten zum Stromnetz erlauben es eine kontinuierliche und sichere Stromversorgung zu gewährleisten. Mit Daten vom Netzbetreiber, beispielsweise nicht nur aus der unmittelbaren Nähe des Windparks, kann die Leistungsabgabe der Rotoren einzelner Anlagen bzw. eines Windparks verbessert werden.

Die Figur 1 zeigt eine Windenergieanlage 10, die über den beschriebenen Sensor 11, 12, 13, 14, 15, Datenverarbeitungsvorrichtung 16 und Netzinterface 18 verfügt. Der beschriebenen Sensor 11, 12, 13, 14, 15, Datenverarbeitungsvorrichtung 16 und Netzinterface 18 können allerdings auch als Sensorkit für eine Montage an einer Windenergieanlage bereitgestellt werden. Das Ergebnis der Montage des Sensorkits an eine Windenergieanlage kann die in Figur 1 dargestellt Windenergieanlage 10 sein.

Ist das Sensorkit eingerichtet, um nachrüstbar an einer Windenergieanlage angebracht zu werden, können dadurch insbesondere älterer Windenergieanlagen mit moderner Sensorik ausgerüstet werden und die damit verbunden Vorteile erreicht werden. Dabei können sowohl der Sensor 11, 12, 13, 14, 15, die Datenverarbeitungsvorrichtung 16 und das Netzinterface 18 an der Windenergieanlage montiert werden.

Figur 2 zeigt ein System mit einer Windenergieanlage 10 und einem onlinebasierten Speicher- und Serverdienst 20, wie beispielsweise einer Cloud, gemäß hierin beschriebener Ausführungsformen. Die Windenergieanlage kann dabei beispielsweise die Windenergieanlage aus Figur 1 sein.

Wie in Figur 2 gezeigt kann die Windenergieanlage 10 mit dem onlinebasierten Speicher- und Serverdienst 20 über eine Datenverbindung verbunden sein. Die Datenverbindung kann über das Netzinterface 18 der Windenergieanlage 10 aufgebaut worden sein. Die onlinebasierten Speicher- und Serverdienst 20 kann eine entsprechende Schnittstelle zum Aufbau der Datenverbindung aufweisen.

Gemäß hierein beschriebener Ausführungsformen kann das System ferner ein Endgerät 30 umfassen. Das Endgerät 30 kann eingerichtet sein, Daten von dem onlinebasierten Speicher- und Serverdienst 20 zu empfangen. Insbesondere kann das Endgerät 30 eingerichtet sein, Daten zu empfangen, die zuvor von der Windenergieanlage 10 an den onlinebasierten Speicher- und Serverdienst 20 gesendet wurden. In Praxis können sie Daten von der Windenergieanlage 10 an andere Geräte, insbesondere in Echtzeit, zur Verfügung gestellt werden.

Das Endgerät 10 kann beispielsweise auch eine andere Windenergieanlage im gleichen oder einem anderen Windpark sein. In Praxis könne so Daten zwischen mehreren Windenergieanlagen ausgetauscht werden. Ferner kann die Windenergieanlage 10 auch Daten von dem onlinebasierten Speicher- und Serverdienst 20 empfangen. Die Daten können Daten sein, die die Windenergieanlage 10 zuvor selbst hochgeladen hat. Dies können zum Beispiel historische Daten und/oder weiter verarbeitete Daten, die insbesondere im onlinebasierten Speicher- und Serverdienst 20 weiterverarbeitet wurden, sein. Zudem kann der onlinebasierte Speicher- und Serverdienst 20 auch andere Daten an die Windenergieanlage 10 senden. Das können die Daten von anderen Windenergieanlagen sein, aber auch Softwareupdates, beispielsweise für die Sensoren 11, 12, 13, 14, 15, der Datenverarbeitungsvorrichtung 16 und/oder das Netzinterface 18. So kann die Datenverarbeitungsvorrichtung 16 anlagenspezifisch und über den Zeitverlauf aus der Ferne angepasst werden. Ferner können so Erkenntnisse, die in dem onlinebasierten Speicher- und Serverdienst 20 entstehen, auf andere Windenergieanlagen übertragen werden.

Ferner kann das System 10 eingerichtet sein, um mit einem SCADA-System 40 zu kommunizieren. Beispielsweise kann das System 10, insbesondere der onlinebasierten Speicher- und Serverdienst 20, über einen Schnittstelle, wie eine API ("Application-Programming-Interface"), mit dem SCADA-System 40 verbunden sein. Das SCADA-System 40 kann beispielsweise ein 2nd Level SCADA-System sein. In der Praxis kann also nach der Datenübertragung an die Cloud, neben der Bereitstellung der Daten, auch eine Integration der Daten über eine API in eine bestehende Second Level SCADA-Software ermöglicht werden.

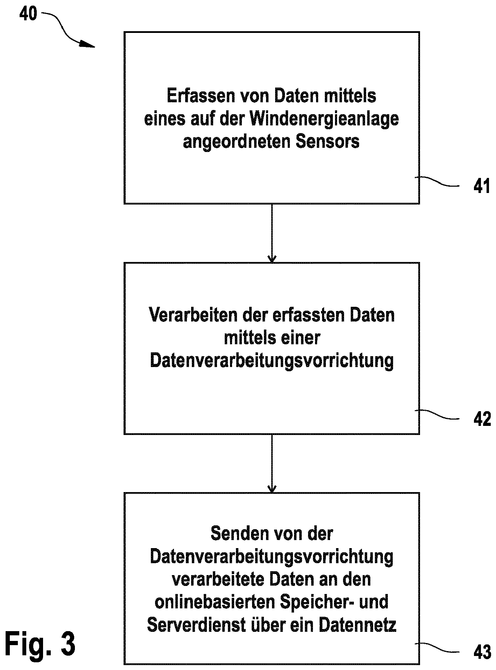

Figur 3 zeigt ein Flussdiagramm zur Veranschaulichung eines Verfahren 40 zum Senden von Daten von einer Windenergieanlage 10 an einen onlinebasierten Speicher- und Serverdienst 20 gemäß Ausführungsformen. Die Windenergieanlage 10 und/oder der onlinebasierte Speicher- und Serverdienst 20 kann/können dabei beispielsweise die Windenergieanlage 10 bzw. der onlinebasierte Speicher- und Serverdienst 20 aus Figuren 1 und 2 sein.

Gemäß einem Kasten 41, weist das Verfahren ein Erfassen von Daten mittels eines auf der Windenergieanlage 10 angeordneten Sensors 11, 12, 13, 14, 15 auf. Gemäß einem Kasten 42, weist das Verfahren ein Verarbeiten der erfassten Daten mittels einer Datenverarbeitungsvorrichtung 16 auf. Insbesondere kann die Datenverarbeitungsvorrichtung 16 an der Windenergieanlage 10 angeordnet oder angebracht sein. Gemäß einem Kasten 43, weist das Verfahren ein Senden von der Datenverarbeitungsvorrichtung 16 verarbeitete Daten an den onlinebasierten Speicher- und Serverdienst 20 über ein Datennetz auf.

Gemäß hierin beschriebener Ausführungsformen kann das Verfahren ferner ein Verbinden der Datenverarbeitungsvorrichtung 16 mit dem Datennetz aufweisen. Das Verbinden der Datenverarbeitungsvorrichtung 16 mit dem Datennetz kann über ein Netzinterface 18 wie hierin beschrieben erfolgen.

Es sei an dieser Stelle darauf hingewiesen, dass die hierin beschriebenen Aspekte und Ausführungsformen angemessen miteinander kombinierbar sind, und dass einzelne Aspekte dort weggelassen werden können, wo es im Rahmen des fachmännischen Handelns sinnvoll und möglich ist. Abwandlungen und Ergänzungen der hierin beschriebenen Aspekte sind dem Fachmann geläufig.

## Patentansprüche

1. Sensorkit für eine Windenergieanlage (10), umfassend:
einen an der Windenergieanlage (10) zu montierenden Sensor (11, 12, 13, 14, 15) zum Erfassen von Daten,
eine Datenverarbeitungsvorrichtung (16) zum Verarbeiten der erfassten Daten, und
ein Netzinterface (18) zum Verbinden der Datenverarbeitungsvorrichtung (16) mit einem Datennetz, wobei das Netzinterface (18) eingerichtet ist, um von der Datenverarbeitungsvorrichtung (16) verarbeitete Daten an einen onlinebasierten Speicher- und Serverdienste zu senden , wobei das Sensorkit eingerichtet ist, um nachrüstbar an einer Windenergieanlage (10) angebracht zu werden, und
wobei das Netzwerkinterface (18) einen Mobilfunkstandard verwendet.

## Claims

1. A sensor kit for a wind energy system (10), comprising:
a sensor (11, 12, 13, 14, 15) to be mounted on the wind energy system (10) for capturing data,
a data processing device (16) for processing the captured data, and
a network interface (18) for connecting the data processing device (16) to a data network, wherein the network interface (18) is adapted to send data processed by the data processing device (16) to an online-based storage and server service,
wherein the sensor kit is adapted to be mounted on a wind energy system (10) in a retrofittable manner, and
wherein the network interface (18) uses a cellular standard.

## Revendications

1. Kit de capteur pour une éolienne (10), comprenant :
un capteur (11, 12, 13, 14, 15) à monter sur l'éolienne (10) pour collecter des données,
un dispositif de traitement de données (16) pour traiter les données collectées, et
une interface réseau (18) pour connecter le dispositif de traitement de données (16) à un réseau de données, l'interface réseau (18) étant configurée pour envoyer des données traitées par le dispositif de traitement de données (16) à un service de stockage et de serveur en ligne, le kit de capteur étant configuré pour être installé ultérieurement sur une éolienne (10), et
dans lequel l'interface réseau (18) utilise une norme de radio mobile.
